# EUROPÄISCHE PATENTSCHRIFT

(11) **EP 1 299 802 B1**
(45) Veröffentlichungstag und Bekanntmachung des Hinweises auf die Patenterteilung: **01.09.2004**
(21) Anmeldenummer: 01953799.2
(22) Anmeldetag: 20.06.2001
(51) Int. Cl.: G06F 9/00

(54) **ELEKTRONISCHES SYSTEM ZUR ENTWICKLUNG VON SOFTWARE UND EIN VERFAHREN ZUM ZUGRIFF AUF INTERNE DATEN DER SOFTWARE**
ELECTRONIC SYSTEM FOR DEVELOPING SOFTWARE AND A METHOD FOR ACCESSING THE INTERNAL DATA OF SAID SOFTWARE
SYSTEME ELECTRONIQUE POUR DEVELOPPER UN LOGICIEL ET PROCEDE POUR ACCEDER A DES DONNEES INTERNES DU LOGICIEL

(30) Priorität: 30.06.2000 DE 10030988
(43) Veröffentlichungstag der Anmeldung: 09.04.2003
(73) Patentinhaber: ROBERT BOSCH GMBH, 70442 Stuttgart (DE)
(72) Erfinder: WAGNER, Horst, 70469 Stuttgart (DE)
(86) Internationale Anmeldenummer: PCT/DE2001/002276
(87) Internationale Veröffentlichungsnummer: WO 2002/003193

(56) Entgegenhaltungen:
- EP-A- 0 712 080
- STALLMAN R M: "The C Preprocessor" GCC VERSION 2 DOCUMENTATION, [Online] September 1998 (1998-09), XP002201285 Gefunden im Internet: <URL:http://gcc.gnu.org/onlinedocs/gcc-2.9 5.3/cpp.ps.gz> [gefunden am 2002-06-05]
- TEMPLER K S ET AL: "A configurable automatic instrumentation tool for ANSI C" AUTOMATED SOFTWARE ENGINEERING, 1998. PROCEEDINGS. 13TH IEEE INTERNATIONAL CONFERENCE ON HONOLULU, HI, USA 13-16 OCT. 1998, LOS ALAMITOS, CA, USA,IEEE COMPUT. SOC, US, 13. Oktober 1998 (1998-10-13), Seiten 249-258, XP010315414 ISBN: 0-8186-8750-9
- LUBKIN D C: "DSEE: A SOFTWARE CONFIGURATION MANAGEMENT TOOL" HEWLETT-PACKARD JOURNAL, HEWLETT-PACKARD CO. PALO ALTO, US, Bd. 42, Nr. 3, 1. Juni 1991 (1991-06-01), Seiten 77-83, XP000260722

## Beschreibung

### Stand der Technik

Die Erfindung betrifft ein elektronisches System zur Entwicklung von Software gemäß dem Oberbegriff des Patentanspruchs 1 und ein entsprechendes Verfahren für den Zugriff auf interne Daten der zu entwickelnden Software nach dem Oberbegriff des Patentanspruchs 6. Die Erfindung betrifft weiterhin einen Datenträger, der als Speichermedium für ein elektronisches System dient.

Bei der Softwareentwicklung ist häufig die Beobachtung und Manipulation von internen Daten des zu entwickelnden Anwenderprogramms erforderlich. Die Entwicklung erfolgt auf einem elektronischen System zur Entwicklung von Software, einem Entwicklungsrechner. Erst nach Abschluß der Entwicklung wird das fertiggestellte Anwenderprogramm auf das Zielsystem übertragen.

Elektronische Systeme zur Entwicklung von Software weisen eine Steuereinheit bzw. ECU (Electronic Control Unit) auf. Um Fehler im Programm zu entdecken und somit einen späteren fehlerlosen Ablauf desselben zu gewährleisten, ist es notwendig, interne Daten der Anwendersoftware im Laufe der Programmentwicklung des Anwenderprogrammes zu beobachten und gegebenenfalls zu manipulieren. Nur der direkte Zugriff auf interne Daten der zu entwickelnden Software von Beginn der Entwicklung bis zu deren Abschluß kann sicherstellen, daß das entwickelte Programm auf dem Zielsystem, beispielsweise einem eingebetteten Echtzeitsystem, die gestellten Anforderungen erfüllt. Anforderungen sind beispielsweise Zeitanforderungen. Gerade bei zeitkritischen Systemen mit harten Echtzeitanforderungen ist es unumgänglich, das zeitliche Verhalten des Programms schon während der Programmentwicklung genau zu überwachen. Hierzu ist es erforderlich, sowohl Daten zu lesen als auch zu manipulieren.

Die Möglichkeit des Zugriffs (lesend oder schreibend) auf interne Daten gestattet außerdem ein effizientes Rapid Prototyping. Prototypen von neuen oder veränderten Anwenderprogrammen können an die bestehenden Strukturen angekoppelt werden. Prototypen erlauben es beispielsweise dem Entwickler, das zu entwickelnde Programm vor Abschluß der Entwicklung auf dem Zielsystem zu testen. Dies kann auch für den späteren Nutzer des Programms sehr nützlich sein, da er schon zu einem sehr frühen Zeitpunkt und fortlaufend überprüfen kann, ob das Programm seinen Vorstellungen entspricht.

Eine Möglichkeit für den Zugriff auf interne Daten stellen sogenannte Debugger dar (siehe Dokument EP-A-0 712 080). Dies sind Programme, die durch Überprüfen interner Daten Fehler entdecken und diese beseitigen. Debugger sind in der Regel aber nicht für Problemstellungen geeignet, bei denen das Zeitverhalten der ECU (Electronic Control Unit), nämlich der CPU des elektronischen Systems, nicht beeinflußt werden darf. Aufgrund der äußeren Bedingungen ist der Einsatz von Debuggern in Kraftfahrzeugen oft nicht möglich. Zudem sind Debugger in der Regel nicht geeignet, Funktionsprototypen zu realisieren. Ein effizientes Rapid Prototyping ist somit nicht möglich.

Daher werden bereits im Rahmen der Entwicklung des Anwenderprogramms Schnittstellen in dieses implementiert, die zu einem späteren Zeitpunkt, das heißt in einem späteren Stadium der Softwareentwicklung oder während der Laufzeit des Anwenderprogramms, einen Zugriff auf interne Daten ermöglichen. Diese Implementierungen bedingen Änderungen des Anwenderprogramms im Hinblick auf die speziellen Anforderungen, was wiederum zur Folge hat, daß häufig individuelle Softwarelösungen für unterschiedliche Anwendungen entwickelt werden. Die Uneinheitlichkeit der Lösungen auch für ähnliche Aufgabenstellungen zieht eine Vermehrung der Varianten nach sich und erhöht den Pflegeund Wartungsbedarf.

Ein weiterer Nachteil ist, daß die im Verlauf der Softwareentwicklung implementierten Schnittstellen, auch dann wenn sie nicht mehr benötigt werden, im Quelltext des Programms und dem ausführbaren Code verbleiben. Dies bedeutet eine starke Beanspruchung von Resourcen (Programmspeicher, flüchtiger Speicher), was wiederum negative Auswirkungen auf das Zeitverhalten des Systems hat sowie die Systemkosten erhöht. Weiterhin wird durch eine solche Vorgehensweise die Dokumentation der Programme und deren Verständlichkeit erschwert.

Aufgabe der vorliegenden Erfindung ist es daher, ein elektronisches System zur Entwicklung von Software vorzuschlagen, das bei Vermeidung der genannten Nachteile einen direkten Zugriff auf die internen Daten des zu entwickelnden Anwenderprogramms bietet.

Desweiteren ist Aufgabe der Erfindung, ein Verfahren vorzustellen, welches einen direkten Zugriff auf die internen Daten eines zu entwickelnden Programms'ermöglicht.

Außerdem ist Aufgabe der Erfindung, einen Datenträger zu entwickeln, der als Speichermedium für ein elektronisches System zur Programmentwicklung dienen kann.

Die Aufgabe betreffend das elektronische System wird durch ein solches mit den Merkmalen des Anspruchs 1 gelöst.

Die auf das Verfahren bezogene Aufgabe wird durch ein Verfahren gemäß Anspruch 6 gelöst.

Ein Datenträger zur Lösung der Aufgabe ergibt sich aus Anspruch 11.

Vorteilhafte Ausgestaltungen der Erfindung ergeben sich aus den Unteransprüchen.

### Vorteile der Erfindung

Ausgegangen wird von einem elektronischen System mit einer Steuereinheit und einem Speichermedium, das ein zu entwickelndes Anwenderprogramm enthält. Das elektronische System verfügt über wenigstens eine Schnittstelle, die einen Zugriff auf interne Daten der Steuereinheit ermöglicht. Das erfindungsgemäße System zeichnet sich dadurch aus, daß im Anwenderprogramm wenigstens eine Zugriffsstelle vorgesehen ist und im Speichermedium ein Konfigurationsprogramm gespeichert ist. Dieses enthält Daten, welche die wenigstens eine Schnittstelle beschreiben und der wenigstens einen Zugriffsstelle im Anwenderprogramm zuzuordnen sind.

Die Schnittstelle ist somit im Quelltext des Anwenderprogramms und im Konfigurationsprogramm implementiert. Bei der Entwicklung des Anwenderprogramms werden lediglich in diesem Zugriffsstellen eingebracht, die einen späteren Zugriff auf interne Daten ermöglichen. Die Daten zur Beschreibung der Schnittstellen befinden sich jedoch im Konfigurationsprogramm. Für einen Zugriff auf interne Daten werden diese Daten nach Bedarf in das ausführbare Anwenderprogramm expandiert. Zwischen der Zugriffsstelle im Quelltext und der Schnittstellenbeschreibung im Konfigurationsprogramm wird durch eine eindeutige Kennung referenziert.

Die Trennung der Schnittstelleninformationen vom Anwenderprogramm bewirkt, daß der Quelltext des Anwenderprogramms für unterschiedliche Datenzugriffe nicht geändert werden muß. Lediglich das Konfigurationsprogramm muß nach Bedarf ausgetauscht werden. Außerdem werden im Anwenderprogramm und in der Steuereinheit keine Resourcen belegt, wenn keine Schnittstelle benötigt wird. Diese universelle Schnittstelle erlaubt auf interne Daten sowohl lesend als auch schreibend zuzugreifen. Es ist möglich, die für eine Anwendung benötigten Zugriffsstellen konsistent ein- und auszuschalten.

Die einheitliche Instrumentierung im Anwenderprogramm vermeidet Varianten der Quelltextmodule für unterschiedliche Schnittstellenanforderungen. Beispiele für mögliche Anwendungen, die eine universelle Schnittstelle einsetzen, sind:
- Meßpunkte für Programmtest und Applikation;
- Stimuliereingriffe für den Programmtest und Frequenzgangmessungen;
- Externer Bypass (Prototypfunktion wird nicht in der ECU berechnet);
- Interner Bypass (Prototypfunktion wird in der ECU berechnet);
- Interne bzw. externe Datenlogger;
- Software Laborauto.

Der Mechanismus der universellen Schnittstelle ist für Offline- sowie für Onlineanwendungen unter Echtzeitbedingungen einsetzbar. Das Zeitverhalten der Berechnungen bleibt dabei weitgehend erhalten. Die Datenkonsistenz - Kausalität zwischen Ein- und Ausgangsgrößen - entspricht derjenigen des Programms ohne Schnittstellen.

Bevorzugt weist das Konfigurationsprogramm eine globale Konfigurationsdatei und wenigstens eine lokale Konfigurationsdatei auf. Die wenigstens eine lokale Konfigurationsdatei enthält die Daten zur Beschreibung der wenigstens einen Schnittstelle. Sind mehrere lokale Konfigurationsdateien vorgesehen, können diese jeweils die Daten zur Beschreibung einer der Schnittstellen enthalten. Es kann auch eine oder mehr lokale Konfigurationsdateien geben, die Daten für keine Schnittstelle bzw. Zugriffsstelle enthalten. Die globale Konfigurationsdatei ist übergeordnet und realisiert projektspezifische Einstellungen. Das bedeutet, daß sie je nach Anwendung bestimmte Schnittstellenbeschreibungen auswählt und den entsprechenden Zugriffsstellen im Anwenderprogramm zuordnet. Die Schnittstellenbeschreibungen werden dann in das Anwenderprogramm expandiert.

Von Vorteil ist es, wenn die Daten zur Beschreibung der Schnittstellen in den lokalen Konfigurationsdateien gruppiert sind. Diese Gruppierung kann beispielsweise auf der Art der Schnittstellenkonfiguration (lesend, schreibend) beruhen. Es ist auch eine funktionale Gruppierung möglich, so daß einzelne Funktionen des Anwenderprogramms selektiert werden können. Durch Einstellungen in der globalen Konfigurationsdatei wird dann die Expansion einzelner Gruppen gesteuert.

Durch diese Einstellungen in der globalen Konfiguration wird die Expansion einzelner Gruppen gesteuert, d.h. in das ausführbare Programm eingebracht oder nicht. Für jede einzelne Schnittstellenbeschreibung wird die Expansion damit als logische Verknüpfung der Gruppenkonfigurationen ausgewertet, der sie angehört.

Durch funktionale Gruppierungen lassen sich zum Beispiel alle Zugriffe zusammenfassen, welche zur Frequenzganganalyse notwendig sind. Eine weitere mögliche Gruppierung wären Zugriffe für den Test eines Reglers. Eine Schnittstellenbeschreibung kann mehreren Gruppen angehören. Die Gruppierung ermöglicht die konsistente Aktivierung bzw. Deaktivierung von verteilten Beschreibungen mehrerer Schnittstellen durch eine einzige Benennung in der globalen Konfigurationsdatei. Die Expansion einer Schnittstellenanwendung ins ausführbare Anwender programm erfordert damit nur das Aktivieren der anwendungsspezifischen Gruppe und ein Übersetzen und Binden des Programms. Dies wird vom Konfigurationsprogramm ausgeführt.

In einer bevorzugten Ausgestaltung enthält das Speichermedium wenigstens einen Gerätetreiber. Dieser wird durch den Linker mit dem Anwenderprogramm verbunden. Die mit dem Anwenderprogramm verbundenen Treiber werden compiliert und befinden sich nach Übertragung des Anwenderprogramms auf das Zielsystem ebenfalls auf diesem. Treiber können beispielsweise Gerätetreiber für eine serielle Schnittstelle oder einen CAN sein.

Die Zugriffsstellen werden bereits während der Programmentwicklung im Quelltext des Anwenderprogramms implementiert. Bei einer textuellen Programmierung erfolgt die Implementierung durch ein Schlüsselwort. Diese Aufgabe kann auch durch einen geeigneten Kommentareintrag geleistet werden. Bei einer graphischen Programmiersprache ist die Implementierung durch ein graphisches Strukturelement möglich. Neben der textuellen Beschreibung der Schnittstellenkonfiguration ist auch die Eingabe durch ein geführtes Menue oder graphisch möglich.

Das erfindungsgemäße Verfahren zum Zugriff auf interne Daten einer Steuereinheit nach dem Oberbegriff des Anspruchs 6 zeichnet sich dadurch aus, daß für den Zugriff Daten zur Beschreibung der wenigstens einen Schnittstelle, die in einem Konfigurationsprogramm in dem Speichermedium abgelegt sind, wenigstens einer Zugriffsstelle im Anwenderprogramm zugeordnet werden. Je nach Bedarf wird ein Konfigurationsprogramm eingesetzt, welches die Daten zur Beschreibung der benötigten Schnittstellen enthält. Diese werden dann den entsprechenden Zugriffsstellen im Anwenderprogramm zugeordnet. Anschließend kann der Zugriff auf die internen Daten erfolgen.

Das Konfigurationsprogramm weist bevorzugt eine globale Konfigurationsdatei und wenigstens eine lokale Konfigurationsdatei auf. Die lokalen Konfigurationsdateien enthalten die Daten zur Beschreibung der Schnittstellen. Diese werden entsprechend den in der globalen Konfigurationsdatei enthaltenen Daten den Zugriffsstellen im Anwenderprogramm zugeordnet. So muß lediglich für unterschiedliche Anwendungen die globale Konfigurationsdatei ausgetauscht werden.

Sind mehrere lokale Konfigurationsdateien vorgesehen, können diese jeweils die Daten zur Beschreibung einer der Schnittstellen enthalten. Es ist möglich, daß eine oder mehr lokale Konfigurationsdateien ohne Schnittstellenbeschreibung vorgesehen sind.

Die Daten in den lokalen Konfigurationsdateien werden bevorzugt gruppiert.

Zweckmäßig sind die benötigten Gerätetreiber im Speichermedium gespeichert. Diese werden dann beim Zugriff auf die internen Daten mit dem Anwenderprogramm verbunden. Nach dem Compilieren des Anwenderprogramms und Übertragen auf den Zielrechner verbleiben die benötigten Gerätetreiber im Anwenderprogramm und befinden sich somit compiliert auf dem Zielsystem.

Der erfindungsgemäße Datenträger dient als Speichermedium für ein elektronisches System zur Programmentwicklung, welches einen Zugriff auf interne Daten des zu entwickelnden Programms bietet. Der Datenträger weist ein Anwenderprogramm und ein Konfigurationsprogramm auf. Im Anwenderprogramm ist zumindest eine Zugriffsstelle implementiert. Das Konfigurationsprogramm enthält Daten zur Beschreibung der wenigstens einen Schnittstelle.

Vorteilhafterweise weist das Konfigurationsprogramm eine globale Konfigurationsdatei und wenigstens eine lokale Konfigurationsdatei auf.

Bevorzugt ist in dem Datenträger wenigstens ein Gerätetreiber gespeichert.

### Zeichnungen

Die Erfindung wird anhand der beigefügten Zeichnung näher erläutert. In dieser zeigt:
- Figur 1: ein Diagramm zur Erläuterung einer bevorzugten Ausführungsform des erfindungsgemäßen Verfahrens;
- Figur 2: eine schematische Darstellung einer bevorzugten Ausführungsform des erfindungsgemäßen elektronischen Systems.

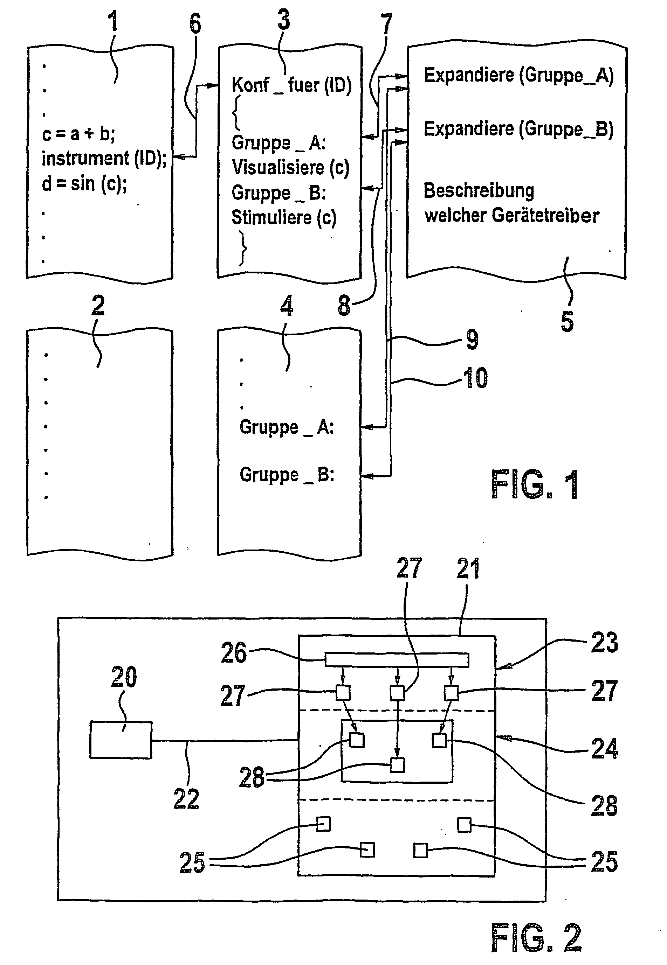

Figur 1 soll die Funktionsweise des erfindungsgemäßen Verfahrens verdeutlichen. Zu erkennen ist ein erstes Anwenderprogramm 1 und ein zweites Anwenderprogramm 2. Weiterhin ist eine erste lokale Konfigurationsdatei 3 und eine zweite lokale Konfigurationsdatei 4 dargestellt. Des weiteren zeigt die Zeichnung eine globale Konfigurationsdatei 5.

Das Anwenderprogramm 1 enthält den Programmcode, welcher compiliert zu einem späteren Zeitpunkt auf dem Zielsystem zur Anwendung kommt. Der Ausdruck "instrument (ID)" ist ein Vorhalt einer abstrakten Schnittstelle, also eine mögliche Zugriffstelle auf das Anwenderprogramm zum Lesen und/oder Manipulieren dessen interner Daten. Die lokale erste Konfigurationsdatei 1 enthält Beschreibungen für das Lesen (Visualisieren) und Beschreiben (Stimulieren) der Größe c des Anwenderprogramms. Es könnte über die Kennung ID aber auch zum Beispiel auf die Größe a zugegriffen werden. Der Pfeil 6 verdeutlicht die Expansion der Schnittstellenkonfiguration aus der ersten lokalen Konfigurationsdatei 3 auf das Anwenderprogramm 1. In der ersten Konfigurationsdatei 3 sind die Schnittstellenbeschreibungen in zwei Gruppen unterteilt, nämlich Gruppe A und Gruppe B. Die Gruppierung kann wie hier auf der Art der Schnittstellenkonfiguration (lesend, schreibend) beruhen. Es ist aber auch eine funktionale Gruppierung möglich, so daß einzelne Funktionen des Anwenderprogramms selektiert werden können.

In der globalen Konfigurationsdatei 5 sind unterschiedliche Konfigurationen in den Gruppen Gruppe_A und Gruppe_B zusammengefaßt. Die globale Konfigurationsdatei 5 macht hier folgende Vorgaben: Führe die Konfigurationen der Gruppe_A aus und führe die Konfiguration der Gruppe_B nicht aus. Diese Vorgaben gelten für alle lokalen Konfigurationsdateien. Der Zugriff der globalen Konfigurationsdatei 5 auf die erste lokale Konfigurationsdatei 3 ist durch die Pfeile 7 und 8 verdeutlicht, der Zugriff auf die zweite Konfigurationsdatei 4 durch die Pfeile 9 und 10.

Die Durchführung der Aktionen (Lesen der Dateien, Aufbau einer Datenbank, Expansion der Makros, ...) wird vom Konfigurationsprogramm durchgeführt.

In der globalen Konfigurationsdatei 5 ist ebenfalls beschrieben, welches physikalische Medium (Bus, serielle oder parallele Schnittstelle) sowie welches Protokoll für den Zugriff auf Daten verwendet wird. Diese Information muß nicht in derselben Datei abgelegt sein wie die Information bezüglich der zu expandierenden Gruppen.

In Figur 2 ist ein elektronisches System 1 zur Entwicklung von Software in schematischer Darstellung gezeigt. Dieses weist eine Steuereinheit 20 und ein Speichermedium 21 auf, die über einen Datenbus 22 miteinander verbunden sind. Der Datenbus 22 erlaubt das Lesen und Schreiben von Daten. Im Speichermedium 21 sind ein Konfigurationsprogramm 23, ein Anwenderprogramm 24 und vier Gerätetreiber 25 abgelegt. In diesem Beispiel finden sich die Daten alle auf einem Speichermedium. Sie können sich aber durchaus auch auf mehreren Speichermedien befinden.

Das Konfigurationsprogramm 23 umfaßt eine globale Konfigurationsdatei 26 und drei lokale Konfigurationsdateien 27. Die lokalen Konfigurationsdateien 27 enthalten die Daten zur Beschreibung der Schnittstellen. Das heißt, daß sie Beschreibungen für das Lesen und Beschreibungen von Daten im Anwenderprogramm 24 enthalten. Die globale Konfigurationsdatei 26 ist übergeordnet. Diese realisiert projektspezifische Einstellungen. Das bedeutet, daß sie Informationen dazu enthält, welche Schnittstellenbeschreibungen oder welche Gruppen von Schnittstellenbeschreibungen in den lokalen Konfigurationsdateien 27 in das Anwenderprogramm 24 expandiert werden sollen. Die Durchführung dieser Aktionen wird vom Konfigurationsprogramm 23 ausgeführt.

Im Anwenderprogramm 24 sind drei Zugriffsstellen 28 implementiert. Zugriffsstellen 28 sind Stellen im Anwenderprogramm 24, an denen gegebenenfalls auf interne Daten des Anwenderprogramms zugegriffen wird, d.h. daß an diesen Stellen interne Daten des Anwenderprogramms gelesen und/oder beschrieben werden sollen. Nach Maßgabe der globalen Konfigurationsdatei 8 werden die benötigten Daten zur Beschreibung der Schnittstellen den Zugriffsstellen 28 aus den lokalen Konfigurationsdateien 27 im Anwenderprogramm 24 zugeordnet und in dieses expandiert. Dies führt das Konfigurationsprogramm 23 durch. Ausgehend von den Zugriffsstellen 28 kann auf die Daten des Anwenderprogramms 24 zugegriffen werden. Durch Einstellungen in der globalen Konfigurationsdatei 26 werden die Daten zur Beschreibung der Schnittstellen in das ausführbare Anwenderprogramm 24 expandiert.

Das beschriebene Verfahren läuft somit auf dem Entwicklungsrechner ab. Der Zugriff auf die internen Daten des Anwenderprogramms 24 erfolgt während der Programmentwicklung. Es wird für das Zielsystem ein Anwenderprogramm entwickelt, welches die spezifizierten Zugriffsmöglichkeiten auf Daten des Zielsystems bietet. Nur diese spezifizierten Zugriffsmöglichkeiten sind im Anwenderprogramm enthalten. Beschreibungen von Schnittstellen, welche nur während der Programmentwicklung benötigt wurden, sind im fertiggestellten Anwenderprogramm nicht mehr enthalten. Dies spart Ressourcen. Der Code des Anwenderprogramms ist von den Schnittstellenbeschreibungen getrennt. Somit ist das Anwenderprogramm unabhängig von den Schnittstellen wiederverwendbar.

Komplexe Zugriffe über die Schnittstellen sind durch wenige Änderungen an der globalen Konfigurationsdatei 26 aktivierbar und deaktivierbar. Die Zugriffe sind unabhängig vom Übertragungsmedium und unabhängig vom verwendeten Protokoll.

Die Gerätetreiber 25 werden nach Bedarf mit dem Linker hinzugebunden. Sie verbleiben nach Bedarf im Anwenderprogramm 24 und werden im compilierten Anwenderprogramm 24 auf dem Zielsystem wiederverwendet.

Für die Ankopplung eines Funktionsprototypen sind beispielsweise zehn lesende und zwei schreibende Zugriffe nötig. Dabei handelt es sich um vorhandene Größen, wie beispielsweise Motordrehzahl, Temperatur, usw. Der Programmierer identifiziert die Größen in den Anwenderprogrammsourcen und ergänzt eventuell in den lokalen Konfigurationsdateien 27 die Zugriffe. In der Regel sind Änderungen der Anwenderprogrammsourcen nicht nötig. Die notwendigen Konfigurationen werden zu einer Gruppe Prot_1 zusammengefaßt. Eine Konfiguration kann keiner, einer oder mehr als einer Gruppe angehören. Durch Aktivieren der Gruppe Prot_1 in der lokalen Konfiguration wird ein Programm mit der spezifizierten Schnittstelle erzeugt. Nach Deaktivierung ist die Schnittstelle im ausführbaren Programm nicht mehr enthalten. Das erzeugte Programm mit der spezifizierten Schnittstelle läuft somit auf dem Entwicklungsrechner. Der Zugriff über die spezifizierte Schnittstelle kann zur Überprüfung der Funktion des Programms verwendet werden. Die Schnittstelle ist weitgehend unabhängig von Änderungen der Source des Anwenderprogramms. Für wiederkehrende Versuche (z.B. Weiterentwicklung eines Leerlaufreglers) in verschiedenen Projekten kann einfach die Schnittstelle wieder aktiviert werden.

Das ausführbare Anwenderprogramm im Zielsystem beinhaltet nur die konfigurierten Schnittstellen. Ob diese Zugriffe zur Laufzeit aktiv sind bzw. aktiviert werden ist abhängig vom gewählten Protokoll, welches durch die Treiber realisiert wird.

Die Abarbeitung der Konfigurationen erfolgt bevorzugt Off-Line. Dadurch ist eine Ressourcenersparnis und die Einhaltung von Echtzeitanforderungen möglich.

## Patentansprüche

1. Elektronisches System zur Entwicklung von Software, mit einem Speichermedium (21), das ein zu entwickelndes Anwenderprogramm (1, 2, 24) enthält, und einer Steuereinheit (20), welche über wenigstens eine Schnittstelle einen Zugriff auf interne Daten des Anwenderprogramms (1, 2, 24) bietet, **dadurch gekennzeichnet, daß** im Anwenderprogramm (1, 2, 24) wenigstens eine Zugriffsstelle (28) vorgesehen ist und im Speichermedium (21) ein Konfigurationsprogramm (23) gespeichert ist, das Daten enthält, welche die wenigstens eine Schnittstelle beschreiben und der wenigstens einen Zugriffsstelle (28) im Anwenderprogramm (1, 2, 24) zuzuordnen und in dieses zu expandieren sind.

2. Elektronisches System nach Anspruch 1, **dadurch gekennzeichnet, daß** das Konfigurationsprogramm (23) wenigstens eine globale Konfigurationsdatei (5, 26) und wenigstens eine lokale Konfigurationsdatei (3, 4, 27), welche die Daten zur Beschreibung der wenigstens einen Schnittstelle enthält, aufweist.

3. Elektronisches System nach Anspruch 2, **dadurch gekennzeichnet, daß** mehrere lokale Konfigurationsdateien (3, 4, 27) vorgesehen sind, die jeweils die Daten zur Beschreibung wenigstens einer der Schnittstellen enthalten.

4. Elektronisches System nach Anspruch 3, **dadurch gekennzeichnet, daß** die Daten zur Beschreibung der Schnittstellen in den lokalen Konfigurationsdateien (3, 4, 27) gruppiert sind.

5. Elektronisches System nach einem der vorstehenden Ansprüche, **dadurch gekennzeichnet, daß** das Speichermedium (21) wenigstens einen Gerätetreiber (25) enthält, welcher mit dem Anwenderprogramm (1, 2, 24) zu verbinden ist.

6. Verfahren zum Zugriff auf interne Daten eines zu entwickelnden Anwenderprogramms (1, 2, 24) mit einem Speichermedium (21), welches das Anwenderprogramm (24) enthält, wobei der Zugriff über wenigstens eine Schnittstelle erfolgt, **dadurch gekennzeichnet, daß** für den Zugriff Daten zur Beschreibung der wenigstens einen Schnittstelle, die in einem Konfigurationsprogramm (23) in dem Speichermedium (21) gespeichert sind, wenigstens einer Zugriffsstelle (28) im Anwenderprogramm (1, 2, 24) zugeordnet und in dieses expandiert werden.

7. Verfahren nach Anspruch 6, **dadurch gekennzeichnet, daß** das Konfigurationsprogramm (23) eine globale Konfigurationsdatei (5, 26) und wenigstens eine lokale Konfigurationsdatei (3, 4, 27), welche die Daten zur Beschreibung der wenigstens einen Schnittstelle enthält, aufweist und die Daten zur Beschreibung der wenigstens einen Schnittstelle in der wenigstens einen lokalen Konfigurationsdatei (3, 4, 27), entsprechend der in der globalen Konfigurationsdatei (5, 26) enthaltenen Daten, der wenigstens einen Zugriffsstelle (28) zugeordnet werden.

8. Verfahren nach Anspruch 7, **dadurch gekennzeichnet, daß** mehrere lokale Konfigurationsdateien (3, 4, 27) vorgesehen sind, die jeweils die Daten zur Beschreibung einer der Schnittstellen enthalten.

9. Verfahren nach Anspruch 8, **dadurch gekennzeichnet, daß** die Daten zur Beschreibung der Schnittstellen in den lokalen Konfigurationsdateien (3, 4, 27) gruppiert werden.

10. Verfahren nach einem der Ansprüche 6 bis 9, **dadurch gekennzeichnet, daß** das Speichermedium (21) wenigstens einen Gerätetreiber (25) enthält und dieser beim Zugriff auf die internen Daten mit dem Anwenderprogramm (1, 2, 24) verbunden wird.

11. Datenträger, der als Speichermedium (21) für ein elektronisches System nach einem der Ansprüche 1 bis 5 dient, welcher ein Anwenderprogramm (1, 2, 24) mit wenigstens einer Zugriffsstelle (28) aufnehmen kann und ein Konfigurationsprogramm (23) aufweist, in welchem die Daten zur Beschreibung wenigstens einer Schnittstelle gespeichert sind.

12. Datenträger nach Anspruch 11, **dadurch gekennzeichnet, daß** das Konfigurationsprogramm (23) eine globale Konfigurationsdatei (5, 26) und wenigstens eine lokale Konfigurationsdatei (3, 4, 27) aufweist.

13. Datenträger nach Anspruch 11 oder Anspruch 12, **dadurch gekennzeichnet, daß** in diesem wenigstens ein Gerätetreiber (25) gespeichert ist.

## Claims

1. Electronic system for developing software, having a storage medium (21), which contains a user program (1, 2, 24) which is to be developed, and a control unit (20) which affords access to internal data in the user program (1, 2, 24) via at least one interface, **characterized in that** the user program (1, 2, 24) contains at least one access point (28), and the storage medium (21) stores a configuration program (23) which contains data which describe the at least one interface and can be associated with the at least one access point (28) in the user program (1, 2, 24) and can be expanded into the latter.

2. Electronic system according to Claim 1, **characterized in that** the configuration program (23) has at least one global configuration file (5, 26) and at least one local configuration file (3, 4, 27) which contains the data for describing the at least one interface.

3. Electronic system according to Claim 2, **characterized in that** there are a plurality of local configuration files (3, 4, 27) which respectively contain the data for describing at least one of the interfaces.

4. Electronic system according to Claim 3, **characterized in that** the data for describing the interfaces are grouped in the local configuration files (3, 4, 27).

5. Electronic system according to one of the preceding claims, **characterized in that** the storage medium (21) contains at least one device driver (25) which can be connected to the user program (1, 2, 24).

6. Method for accessing the internal data in a user program (1, 2, 24) which is to be developed with a storage medium (21) which contains the user program (24), the access being effected via at least one interface, **characterized in that** access involves data for describing the at least one interface, which are stored in a configuration program (23) in the storage medium (21), being associated with at least one access point (28) in the user program (1, 2, 24) and being expanded into the latter.

7. Method according to Claim 6, **characterized in that** the configuration program (23) has a global configuration file (5, 26) and at least one local configuration file (3, 4, 27) which contains the data for describing the at least one interface, and the data for describing the at least one interface in the at least one local configuration file (3, 4, 27) are associated with the at least one access point (28) on the basis of the data contained in the global configuration file (5, 26).

8. Method according to Claim 7, **characterized in that** there are a plurality of local configuration files (3, 4, 27) which respectively contain the data for describing one of the interfaces.

9. Method according to Claim 8, **characterized in that** the data for describing the interfaces are grouped in the local configuration files (3, 4, 27).

10. Method according to one of Claims 6 to 9, **characterized in that** the storage medium (21) contains at least one device driver (25), and said device driver is connected to the user program (1, 2, 24) when the internal data are accessed.

11. Data storage medium used as a storage medium (21) for an electronic system according to one of Claims 1 to 5, which can hold a user program (1, 2, 24) having at least one access point (28) and which has a configuration program (23) in which the data for describing at least one interface are stored.

12. Data storage medium according to Claim 11, **characterized in that** the configuration program (23) has a global configuration file (5, 26) and at least one local configuration file (3, 4, 27).

13. Data storage medium according to Claim 11 or Claim 12, **characterized in that** it stores at least one device driver (25).

## Revendications

1. Système électronique de développement de programmes comportant un support de mémoire (21) avec un programme d'application à développer (1, 2, 24) ainsi qu'une unité de commande (20) qui accède par au moins une interface aux données internes du programme d'application (1, 2, 24),
**caractérisé en ce que**
le programme d'application (1, 2, 24) comporte au moins un point d'accès (28) et le support de mémoire (21) contient un programme de configuration (23) enregistré contenant des données décrivant au moins une interface et auxquelles est associé l'au moins un point d'accès (28) dans le programme d'application (1, 2, 24) pour se développer dans celui-ci.

2. Système électronique selon la revendication 1,
**caractérisé en ce que**
le programme de configuration (23) comporte au moins un fichier de configuration globale (5, 26) et au moins un fichier de configuration locale (3, 4, 27) contenant les données pour décrire au moins une interface.

3. Système électronique selon la revendication 2,
**caractérisé par**
plusieurs fichiers de configuration locale (3, 4, 27) contenant chaque fois les données pour décrire au moins l'une des interfaces.

4. Système électronique selon la revendication 3,
**caractérisé en ce que**
les données de description des interfaces sont groupées dans les fichiers de configuration locale (3, 4, 27).

5. Système électronique selon l'une des revendications précédentes,
**caractérisé en ce que**
le support d'enregistrement (21) comporte au moins un pilote d'appareil (25) qui peut être relié au programme d'application (1, 2, 24).

6. Procédé d'accès aux données internes d'un programme d'application (1, 2, 24) à développer avec un support de mémoire (21) qui contient le programme d'application (24), l'accès se faisant par l'intermédiaire d'au moins une interface,
**caractérisé en ce que**
pour l'accès, des données décrivant l'au moins une interface et enregistrées dans un programme de configuration (23) dans le support de mémoire (21) sont associées à au moins un point d'accès (28) dans le programme d'application (1, 2, 24) et sont développées dans celui-ci.

7. Procédé selon la revendication 6,
**caractérisé en ce que**
le programme de configuration (23) contient un fichier de configuration globale (5, 26), et au moins un fichier de configuration locale (3, 4, 27) contenant les données pour décrire au moins une interface, et les données de description d'au moins une interface sont associées à au moins cette interface (28) dans au moins un fichier de configuration locale (3, 4, 27) en fonction des données contenues dans le fichier de configuration globale (5, 26).

8. Procédé selon la revendication 7,
**caractérisé par**
plusieurs fichiers de configuration locale (3, 4, 27) contenant chaque fois les données servant à décrire l'une des interfaces.

9. Procédé selon la revendication 8,
**caractérisé en ce que**
les données décrivant les interfaces sont groupées dans les fichiers de configuration locale (3, 4, 27).

10. Procédé selon l'une des revendications 6 à 9,
**caractérisé en ce que**
le support de mémoire (21) comporte au moins un pilote d'appareil (25), et celui-ci est relié au programme d'application (1, 2, 24) pour accéder aux données internes.

11. Support de données servant de support de mémoire (21) pour un système électronique selon l'une des revendications 1 à 5, qui peut recevoir un programme d'application (1, 2, 24) avec au moins une interface (28), et comporte un programme de configuration (23) dans lequel sont enregistrées les données pour décrire au moins une interface.

12. Support de données selon la revendication 11,
**caractérisé en ce que**
le programme de configuration (23) comporte un fichier de configuration globale (5, 26) et au moins un fichier de configuration locale (3, 4, 27).

13. Support de données selon la revendication 11 ou 12,
**caractérisé en ce qu'**
il contient au moins un pilote d'appareil (25).
